# FASCICULE DE BREVET EUROPEEN

(11) **EP 2 176 962 B1**
(45) Date de publication et mention de la délivrance du brevet: **03.08.2016**
(21) Numéro de dépôt: 08787231.3
(22) Date de dépôt: 14.08.2008
(51) Int. Cl.: H04B 7/185

(54) **ARCHITECTURE DISTRIBUÉE POUR L'ENSEMBLE DES AIDES À LA RADIONAVIGATION**
VERTEILTE ARCHITEKTUR FÜR KOMPLETTFUNKNAVIGATIONSHILFEN
DISTRIBUTED ARCHITECTURE FOR ALL RADIO NAVIGATION AIDS

(30) Priorité: 17.08.2007 FR 0705886
(43) Date de publication de la demande: 21.04.2010
(73) Titulaire: THALES, 92400 Courbevoie (FR)
(72) Inventeur: BIBAUT, Alain, F-91430 Igny (FR)
(74) Mandataire: Esselin, Sophie
(86) Numéro de dépôt international: PCT/EP2008/060701
(87) Numéro de publication internationale: WO 2009/024532

(56) Documents cités:
- EP-A- 0 789 502
- FR-A- 2 787 658
- FR-A- 2 788 922
- FR-A- 2 819 964
- JP-A- H1 098 408
- US-A- 6 111 543
- US-A1- 2002 045 974
- US-A1- 2004 017 319
- US-A1- 2006 234 700

## Description

La présente invention se rapporte à une architecture distribuée pour l'ensemble des aides à la navigation aérienne.

Pour se localiser en vol, par rapport à des points fixes au sol, un aéronef reçoit un certain nombre de signaux émis par des balises situées en ces points. Ces signaux permettant de désigner soit la distance au point fixe, soit une orientation dans le plan horizontal tangent à la terre et contenant ce point, soit une orientation par rapport à sa verticale locale. Pour traiter ces signaux, l'aéronef est équipé d'une constellation d'antennes, reliées par câbles coaxiaux à des récepteurs dédiés, ceux-ci étant installés dans une baie électronique proche de la cabine de pilotage.

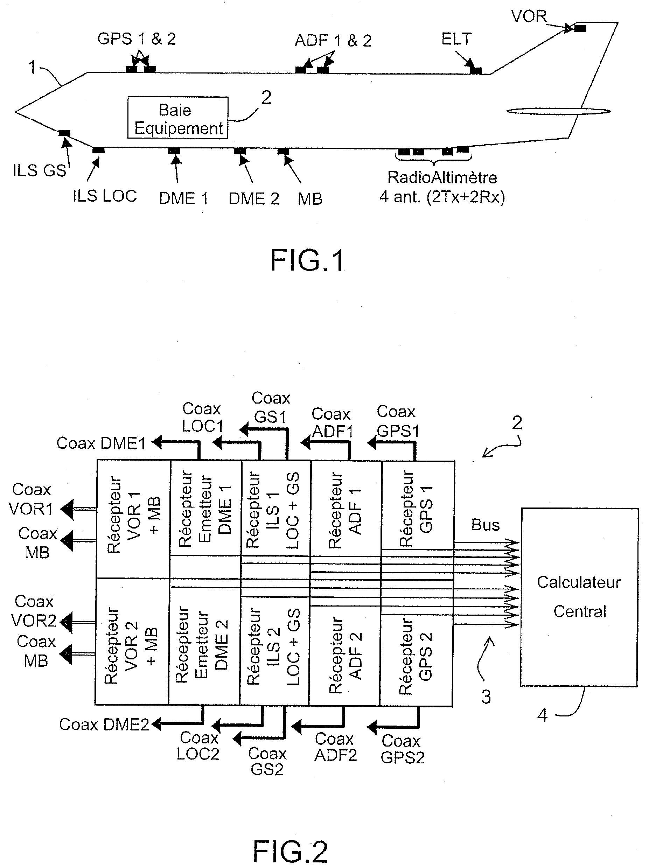

On a représenté en figure 1 un exemple simplifié de disposition des antennes relatives aux équipements d'aide à la navigation aérienne d'un aéronef 1. Ces antennes sont, dans cet exemple, celles relatives aux équipements suivants : GPS (deux antennes), ADF (« Automatic Direction Finder » soit « dispositif automatique de détection de direction, avec deux antennes également), ELT (« Energy Locator Transmitter », soit : « émetteur de localisation d'énergie »), VOR, ILS-GS (« ILS-Glide Slope », soit ILS de détermination de pente de descente), ILS-LC)C (« ILS Localizer», soit ILS de localisation), DME-1 et DME-2 (« Distance Measuring Equipment », soit équipement de mesure de distance), MB (« Marker Beacon », soit : marqueur de balises) et Radio-altimètre (quatre antennes au total, à savoir deux en émission et deux en réception). Toutes ces antennes sont reliées par câbles coaxiaux à des équipements émetteurs et/ou récepteurs correspondants regroupés à la baie électronique 2.

On a schématiquement représenté la partie de la baie électronique 2 relative aux équipements de radionavigation. Ces équipements sont : les récepteurs VOR-1 et 2, les émetteurs-récepteurs DME-1 et 2, les récepteurs ILS-LOC et GS 1 et 2, les récepteurs ADF 1 et 2, et les récepteurs GPS 1 et 2. Les interfaces numériques de ces émetteurs et récepteurs (non représentées) sont reliées par un bus numérique 3 à un calculateur central 4. Les différents émetteurs et récepteurs sont reliés par des câbles coaxiaux (notés « coax » sur le dessin) aux antennes correspondantes.

Le traitement des signaux de navigation par les récepteurs se traduit, entre autres, sous forme d'indications visuelles (cadrans, écrans, compteurs, lumières) et sonores (codes Morse émis par les balises et constituant leurs signatures).

L'inconvénient propre à cette architecture est que la baie électronique prend beaucoup de place, et que l'aéronef est parcouru par un grand nombre de câbles coaxiaux, qui eux-mêmes représentent un grand volume et surtout une masse importante. Ces câbles sont par ailleurs coûteux, car ils sont choisis de manière à présenter des pertes minimales dans le transport de l'information et avoir un blindage très efficace contre les perturbations électromagnétiques.

Une partie du problème peut être résolue en remplaçant les câbles coaxiaux par des liaisons à bases de fibres optiques, mais si cela permet de diminuer le poids et le volume des câbles, cela ne résout pas le problème du volume de la baie électronique et nécessite l'installation de composants dont le niveau d'intégrité est peu connu dans le domaine de l'aéronautique embarquée.

Un autre facteur influençant le poids est que chaque récepteur, aujourd'hui, dispose de sa propre alimentation, c'est-à-dire un convertisseur électrique continu/continu permettant de produire à partir de l'énergie fournie par l'aéronef (19/37 V_{continu}) l'ensemble des tensions continues (±10V, ±15V, ±5V, 3.3V) dont il a besoin pour fonctionner.

La présente invention a pour objet une architecture d'équipements électroniques avioniques comportant un système d'aide à la navigation aérienne et, le cas échéant, un système de capteurs de grandeurs extérieures à l'aéronef et un système de communication, cette architecture étant implantée dans un aéronef comportant plusieurs antennes et capteurs reliés à des équipements embarqués de l'aéronef, ces antennes et capteurs étant installés en divers emplacements répartis sur sa surface extérieure, cette architecture devant permettre de réduire le poids et/ou l'encombrement des câbles reliant les antennes et capteurs aux équipements correspondants, ainsi que le poids et/ou l'encombrement d'au moins une partie desdits équipements.

On connait d'après les documents FR2788922, FR2787658 et EP0789502 des équipements aéronautiques, mais ces équipements ne se rapportent pas à la radionavigation.

Le document EP0708310 décrit une architecture distribuée pour l'ensemble des aides à la navigation aérienne d'un aéronef, en particulier, ce document décrit un dispositif optoélectronique destiné à aider le pilotage.

L'architecture conforme à l'invention est caractérisée en ce qu'une partie au moins des émetteurs et/ou récepteurs de radionavigation est déportée à quelques centimètres ou quelques dizaines de centimètres des antennes correspondantes, et que ces émetteurs et/ou récepteurs déportés sont reliés par des liaisons numériques au calculateur de la baie électronique de l'aéronef.
. De façon avantageuse, une partie au moins de l'alimentation de puissance des équipements de l'aéronef est centralisée, et cette alimentation centralisée distribue aux équipements déportés une alimentation en énergie continue stabilisée.

La présente invention sera mieux comprise à la lecture de la description détaillée d'un mode de réalisation, pris à titre d'exemple non limitatif et illustré par le dessin annexé, sur lequel :
- la figure 1, déjà décrite ci-dessus, est un schéma très simplifié montrant un exemple de localisation d'antennes d'un aéronef civil classique,
- la figure 2, déjà décrite ci-dessus, est un bloc-diagramme partiel d'une baie d'équipements électroniques d'un aéronef tel que celui de la figure 1
- la figure 3 est bloc-diagramme simplifié d'un récepteur classique d'aéronef,
- la figure 4 est un bloc-diagramme simplifié d'un récepteur similaire à celui de la figure 3, mais modifié conformément à la présente invention,
- la figure 5 est un bloc-diagramme simplifié d'une baie d'équipements d'aéronef, conforme à la présente invention,
- la figure 6 est un schéma très simplifié d'une partie d'une installation de radionavigation d'aéronef de l'art antérieur, et
- la figure 7 est un schéma très simplifié d'une partie d'une installation de radionavigation d'aéronef conforme à l'invention.
La solution de l'invention est de déporter au moins une partie des récepteurs dans les antennes, ou à proximité de celles-ci. Ces récepteurs communiquent avec le calculateur central de navigation par liaison numérique, ce qui représente une masse
et un volume négligeables par rapport aux coaxiaux. Dans certains cas, ce gain en poids peut atteindre 90% environ.

La baie électronique se trouve ainsi libérée d'une part importante du volume actuel, puisque la partie RF (premier étage des récepteurs en sortie d'antenne) des récepteurs est généralement celle qui prend le plus de volume. Cela permet également de simplifier la conception des récepteurs puisque n'étant plus accolés les uns aux autres, le danger qu'ils se parasitent mutuellement est amoindri.

Lorsque tous les émetteurs-récepteurs sont déportés, la baie électronique ne contient plus qu'un calculateur central qui communique par bus numérique avec l'ensemble des récepteurs déportés, les pilote, gère les informations qu'ils délivrent pour transmettre au poste de pilotage l'information synthétique dont celui-ci a besoin.

Selon une autre caractéristique de l'invention, on centralise la partie alimentation de puissance qui distribue aux récepteurs déportés des alimentations en courant continu stabilisées. En effet la partie alimentation des récepteurs actuels prend également un volume non négligeable de ces récepteurs et nécessite des protections particulières pour que les opérations qu'elle effectue ne perturbent pas le fonctionnement du reste du récepteur. Donc le bilan de volume et de masse en est d'autant réduit.

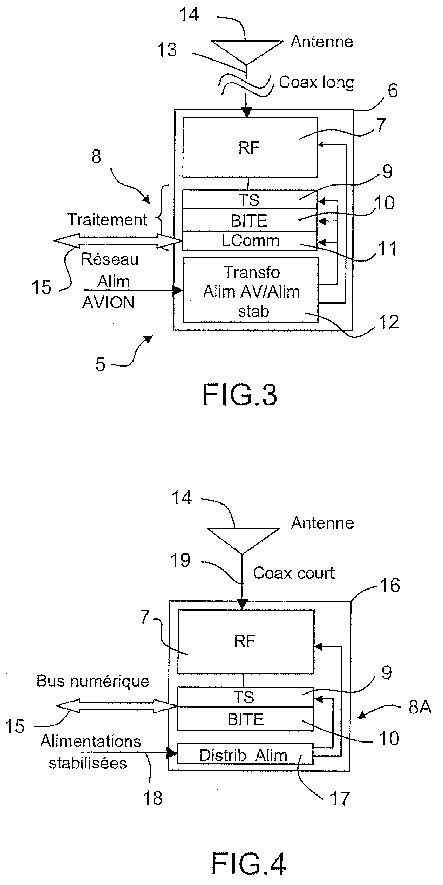

On a représenté en figure 3 le bloc-diagramme d'un récepteur classique 5, disposé dans une baie électronique telle que la baie 2. Ce récepteur 5 comporte essentiellement, dans un boîtier blindé 6 : un étage amplificateur RF 7, des circuits 8 de traitement numérique (comprenant un circuit 9 de traitement de signal ainsi qu'un circuit 10 « BITE » ou « Built-in Test Equipment », c'est-à-dire un équipement de test intégré, et un circuit logique de commande et de contrôle 11), et un circuit d'alimentation de puissance 12 comprenant un transformateur et des circuits d'alimentation stabilisée. L'étage amplificateur 7 est relié par un câble coaxial 13, généralement long (plusieurs dizaines de mètres) à une antenne 14. Les circuits 8 sont reliés par un bus numérique à un calculateur central (tel que le calculateur 4 de la figure 2).

En outre, dans certains cas (récepteurs ILS, VOR et DME), une sortie audio analogique du circuit 9 est reliée par un câble blindé ordinaire 9A à des circuits audio de la cabine de pilotage

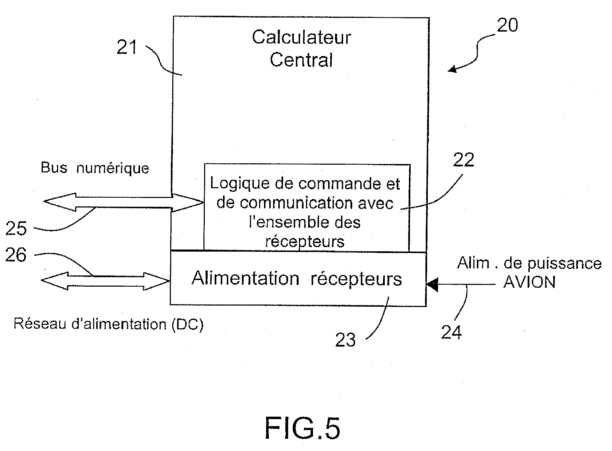

Selon l'invention, et ainsi que représenté en figure 4, le récepteur de la figure 3 est disposé dans un coffret 16 à proximité immédiate de l'antenne 14. et est modifié de la façon suivante. Sur cette figure 4, les mêmes éléments que ceux de la figure 3 sont affectés des mêmes références numériques. Le coffret 16 renferme : l'étage amplificateur RF 7, les circuits 8 de traitement numérique et un circuit 17 de distribution d'alimentation en énergie en courant continu (comportant par exemple des convertisseurs continu/continu) alimentant les circuits 7 et 8, l'ensemble étant beaucoup moins volumineux et beaucoup moins lourd que dans le cas des récepteurs classiques tels que celui schématisé en figure 3. Le circuit 17 est relié par un câble blindé ordinaire 18 au circuit d'alimentation générale (décrit ci-dessous en référence à la figure 5) en courant continu stabilisé de la baie électronique de l'aéronef (baie similaire à la baie 2 de la figure 1). Contrairement au cas de la figure 3, les circuits de traitement numérique 8A ne comportent que le circuit 9 de traitement de signal et le circuit 10 de « BITE», le circuit logique 11 du récepteur de la figure 3 étant alors remplacé par un circuit logique central, décrit ci-dessous en référence à la figure 3. Comme dans le cas de la figure 3, les circuits 8A sont reliés par le bus numérique 15 au calculateur central. L'étage amplificateur RF 7 est relié par un câble coaxial 19 très court (par exemple d'une longueur de quelques centimètres ou quelques dizaines de centimètres) à l'antenne 14. De façon avantageuse, le bus numérique 15 peut être un bus optique.

En variante, les récepteurs déportés peuvent être intégrés aux antennes (qui sont alors du type « smart antennas »).Actuellement, une antenne de ce type est protégée par un radôme fixé sur la « peau » de l'aéronef, à l'extérieur de l'aéronef, et est reliée par un câble coaxial très court (par exemple de quelques centimètres de long) à un module décentralisé dit « INM » (« Intregrated Navigation Module » ou module intégré de navigation) disposé à l'intérieur de la « peau » de l'aéronef, tout près de celle-ci, ce module étant relié par un bus numérique au récepteur correspondant centralisé.

On a schématiquement représenté en figure 5 un exemple de réalisation de la partie de la baie électronique de l'aéronef, relative à la radionavigation et aux capteurs de grandeurs extérieures à l'aéronef, cette partie de baie étant telle que résultant de la transformation de tous les récepteurs conformément à l'invention (ces récepteurs étant les mêmes que le récepteur de la figure 4). Cette baie 20 comprend essentiellement :le calculateur central 21, un circuit logique central 22 de commande et de communication avec l'ensemble des récepteurs déportés, et un dispositif 23 d'alimentation centralisée des récepteurs déportés. Le circuit logique 22 est relié par un bus numérique 25 à l'ensemble des récepteurs déportés. Le dispositif d'alimentation 23 reçoit par un câble 24 l'alimentation en puissance principale de l'aéronef et distribue via une ligne 26 une alimentation en courant continu stabilisé à tous les récepteurs déportés. Ainsi, on diminue significativement le volume et le poids du dispositif d'alimentation en énergie des récepteurs de radionavigation, du fait que l'on remplace les dispositifs d'alimentation individuels des récepteurs (qui comportaient pour chaque récepteur centralisé sa propre alimentation stabilisée et son propre transformateur) par un unique dispositif d'alimentation alimentant l'ensemble des récepteurs déportés. En outre, on diminue les risques de perturbations qui pouvaient être causés par les dispositifs d'alimentation (12) des récepteurs de l'art antérieur.

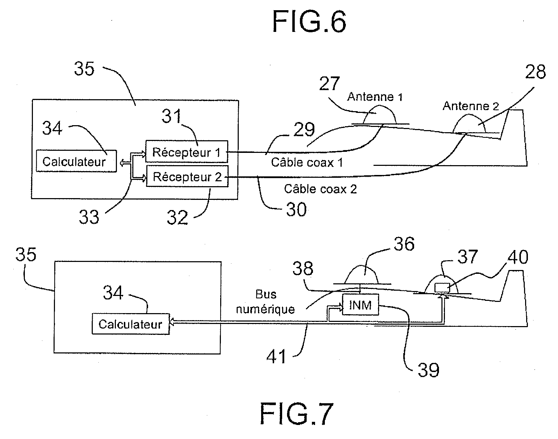

On a illustré la différence entre une installation de radionavigation de l'art antérieur et une installation conforme à l'invention à l'aide des figures 6 et 7, respectivement.

On n'a représenté sur la figure 6 que deux antennes 27 et 28 (et plus précisément les radômes renfermant ces antennes) d'un système de radionavigation, ces antennes étant respectivement reliées par des câbles coaxiaux individuels 29, 30, à un récepteur individuel correspondant 31, 32. Les sorties numériques de ces récepteurs sont reliées par un bus 33 au calculateur 34 de la baie 35 (qui peut être la baie 2 de la figure 1) de l'aéronef. Comme précisé ci-dessus, cette architecture connue présente l'inconvénient de nécessiter autant de câbles coaxiaux qu'il y a d'antennes (ou de capteurs de grandeurs physiques) dont le nombre peut être élevé, comme schématisé en figure 1. Les câbles, tels que 29 et 30 sont longs pour la plupart, et ont donc un poids trop important pour un aéronef, ou tout au moins loin d'être négligeable.

On a schématisé en figure 7 une partie d'une architecture conforme à l'invention, avec deux modes de réalisation différents de récepteurs et antennes associées représentés sur la même figure. Ces antennes, avec leurs radômes, sont référencées 36, 37. L'antenne 36 est reliée par un câble coaxial très court 38 (par exemple d'une longueur d'une dizaine de centimètres) à un récepteur 39, dénommé ici « INM » (« Intregrated Navigation Module » ou module intégré de navigation), disposé à l'intérieur de la « peau » de l'aéronef, tout près de celle-ci, ce récepteur étant tel que celui de la figure 4. L'antenne 37 est du type à récepteur intégré, c'est-à-dire que son récepteur associé 40 (ayant la même architecture que celui de la figure 4) est intégré au radôme de l'antenne. Bien entendu, ceci n'est possible que si le récepteur 40 est conçu pour fonctionner à de très basses températures, telles que pouvant régner à haute altitude, par exemple de l'ordre de -60°C. Il est également bien entendu que l'aéronef sera généralement muni soit de récepteurs du type du récepteur 39, soit du type du récepteur 40.

Tous les récepteurs du système de radionavigation, tel que le récepteur 39 (ou 40) sont reliés à un bus numérique 41, lui-même relié à la logique de commande calculateur 34 de la baie 35, cette logique et le calculateur étant par exemple ceux représentés en figure 5, et la baie 35 étant similaire à la baie 2 de la figure 1.

On constate ainsi que l'architecture de la figure 7 présente une moindre complexité que l'architecture classique de la figure 6, et surtout un poids et un encombrement bien plus petits que dans l'architecture classique, grâce, en particulier, à l'utilisation de bus numériques à la place de câbles coaxiaux.

## Revendications

1. Architecture distribuée pour l'ensemble des aides à la navigation aérienne d'un aéronef, caractérisée qu'une partie au moins des émetteurs et/ou récepteurs de radionavigation (16, 39, 40) est déportée à quelques centimètres ou quelques dizaines de centimètres des antennes correspondantes (14, 36, 37), et que ces émetteurs et/ou récepteurs déportés sont reliés par des liaisons numériques (15, 25, 41) au calculateur (21) de la baie électronique (35) de l'aéronef.

2. Architecture selon la revendication 1, **caractérisée en ce qu'**une partie au moins de l'alimentation de puissance des équipements de l'aéronef est centralisée (23), et que cette alimentation centralisée distribue aux équipements déportés une alimentation en énergie continue stabilisée (26).

3. Architecture selon l'une des revendications précédentes, **caractérisée en ce que** les liaisons numériques sont des bus optiques.

4. Architecture selon l'une des revendications précédentes, **caractérisée en ce qu'**au moins une partie de l'ensemble des émetteurs et/ou récepteurs (40) est intégrée à l'antenne correspondante (37).

## Patentansprüche

1. Verteilte Architektur für sämtliche Flugnavigationshilfen eines Luftfahrzeugs, **dadurch gekennzeichnet, dass** zumindest ein Teil der Funknavigationssender und/oder - empfänger (16, 39, 40) einige Zentimeter oder einige zehn Zentimeter von den entsprechenden Antennen (14, 36, 37) entfernt ist und dass diese entfernten Sender und/oder Empfänger über digitale Verbindungen (15, 25, 41) an den Rechner (21) des Elektronikschranks (35) des Flugzeugs verbunden sind.

2. Architektur gemäß Anspruch 1, **dadurch gekennzeichnet, dass** zumindest ein Teil der Leistungsversorgung der Ausrüstungen des Luftfahrzeugs zentralisiert ist (23) und dass diese zentralisierte Versorgung eine stabilisierte kontinuierliche Energieversorgung (26) der entfernten Ausrüstungen sicherstellt.

3. Architektur nach einem der vorangehenden Ansprüche, **dadurch gekennzeichnet, dass** es sich bei den digitalen Verbindungen um optische Busse handelt.

4. Architektur nach einem der vorangehenden Ansprüche, **dadurch gekennzeichnet, dass** zumindest ein Teil aller Sender und/oder Empfänger (40) in die entsprechende Antenne (37) integriert ist.

## Claims

1. A distributed architecture for all of the aerial navigation aids of an aircraft, **characterised in that** at least part of the radio navigation transmitters and/or receivers (16, 39, 40) is several centimetres or several tens of centimetres remote from the corresponding antennae (14, 36, 37), and **in that** said remote transmitters and/or receivers are connected via digital links (15, 25, 41) to the computer (21) of the electronics compartment (35) of said aircraft.

2. The architecture according to claim 1, **characterised in that** at least part of the power supply for the equipment of said aircraft is centralised (23), and **in that** said centralised power supply distributes a stabilised continuous power supply to the remote equipment (26).

3. The architecture according to any one of the preceding claims, **characterised in that** said digital links are optical buses.

4. The architecture according to any one of the preceding claims, **characterised in that** at least part of the set of transmitters and/or receivers (40) is integrated into the corresponding antenna (37).
